# EUROPÄISCHE PATENTSCHRIFT

(11) **EP 2 466 222 B1**
(45) Veröffentlichungstag und Bekanntmachung des Hinweises auf die Patenterteilung: **05.06.2013**
(21) Anmeldenummer: 10015844.3
(22) Anmeldetag: 20.12.2010
(51) Int. Cl.: F24H 9/18, F24H 3/04, F24H 9/20

(54) **Elektrische Heizvorrichtung**
Electric heating device
Dispositif de chauffage électrique

(43) Veröffentlichungstag der Anmeldung: 20.06.2012
(73) Patentinhaber: Eberspächer catem GmbH & Co. KG, 76863 Herxheim (DE)
(72) Erfinder: Bohlender, Franz, 76870 Kandel (DE); Beetz, Klaus, 76149 Karlsruhe (DE)
(74) Vertreter: Grünecker, Kinkeldey, Stockmair & Schwanhäusser

(56) Entgegenhaltungen:
- EP-A1- 2 056 036
- EP-A1- 2 161 514
- DE-A1- 4 404 345
- US-A- 5 562 844

## Beschreibung

Die vorliegende Erfindung betrifft eine elektrische Heizvorrichtung gemäß dem Oberbegriff des Anspruchs 1.

Eine solche elektrische Heizvorrichtung ist beispielsweise aus der auf die Anmelderin zurückgehenden EP 1 768 459 A1 bekannt. Eine gattungsgemäße elektrische Heizvorrichtung der vorgenannten Art hat üblicherweise ein Wärme erzeugendes Element mit wenigstens einem PTC-Element, an dessen gegenüberliegenden Seitenflächen elektrisch leitende Blechbänder anliegen, über welche das PTC-Element bestromt wird. Diese Bestromung erfolgt üblicherweise bei 12 Volt. Diese Betriebsspannung ist unbedenklich, so dass üblicherweise keine besonderen Maßnahmen ergriffen werden müssen, damit eine ungewollte Berührung des Heizblocks verhindert wird. Üblicherweise liegen an gegenüberliegenden Seiten außen an den Wärme erzeugenden Elementen Wärme abgebende Elemente an, die mit gleicher Polarität bestromt werden wie die Blechbänder. Insofern sind die von dem zu erwärmenden Medium angestrahlten in den Rahmenöffnungen freiliegenden Wärme abgebenden Elemente stromführend.

Das Dokument EP2161514 offenbart dem Oberbegriff des Anspruchs 1.

Aus dem zuvor genannten Stand der Technik ist es bekannt, insbesondere für höhere Betriebsspannungen zwischen den Wärme abgebenden Elementen und den Blechbändern eine Isolierschicht vorzusehen. Dementsprechend sind die Leitungsbahnen zu dem bzw. den PTC-Elementen und den Wärme abgebenden Elementen, d.h. den Radiatorlagen des Heizblocks elektrisch isoliert. Diese elektrische Isolierung bedingt aber auch eine gewisse thermische Isolierung, wodurch der Wirkungsgrad der PTC-Elemente verschlechtert wird. Diese PTC-Elemente haben selbstregelnde Eigenschaften, so dass ein Betrieb der PTC-Elemente bei gutem Wirkungsgrad eine möglichst ungestörte Abfuhr der von den PTC-Elementen erzeugten Wärme bedingt.

Der vorliegenden Erfindung liegt das Problem zugrunde, eine elektrische Heizvorrichtung der eingangs genannten Art anzugeben, die sich auch bei hohen Betriebsspannungen sicher betreiben lässt.

Zur Lösung dieses Problems wird mit der vorliegenden Erfindung die vorerwähnte elektrische Heizvorrichtung durch zumindest einen die jeweilige Gehäuseöffnung abdeckenden Berührungsschutz aus einem isolierenden Material weitergebildet, welcher ein engmaschiges isolierendes Kunststoffnetz umfasst, welches an einer Strebenanordnung befestigt ist, deren Streben die jeweiligen Gehäuseöffnungen überspannen und durch Überspritzen des Kunststoffnetzes mit einer die Strebenanordnung ausbildenden Kunststoffkomponente mit den Streben verbunden ist. Nach der vorliegenden Erfindung ist eine Gehäuseöffnung, insbesondere die in Strömungsrichtung vordere, d.h. von der die Heizvorrichtung durchströmende Luft zunächst durchströmte Gehäuseöffnung mit einem Berührungsschutz versehen. Vorzugsweise sind beide der einander gegenüberliegenden und den normalerweise ebenen Heizblock zwischen sich einschließenden Gehäuseöffnungen durch einen Berührungsschutz abgedeckt. Der Berührungsschutz deckt insbesondere die stromführenden Teile des Heizblocks ab. Der Berührungsschutz ist so engmaschig gewählt, dass ein Benutzer zumindest nicht mit seinen Fingern durch die Rahmenöffnung hindurch zu dem Heizblock gelangen kann. Bevorzugt ist der Berührungsschutz derart ausgestaltet, dass auch üblicherweise zu Reparaturzwecken eingesetzte Werkzeuge nicht durch die Rahmenöffnung hindurch bis zu dem Heizblock gelangen können. Gedacht ist hier an ein relativ engmaschiges Kunststoffnetz. Das Kunststoffnetz sollte aus einem relativ temperaturbeständigen Kunststoff, insbesondere Nylon oder Teflon ausgebildet sein. Das Kunststoffnetz kann dabei auch als gitterförmig ausgebildet betrachtet werden. Engmaschig bedeutet hierbei vorzugsweise, dass die Maschenweite zwischen 0,7 und 1,0 mm, vorzugsweise zwischen 0,8 und 0,9 mm eingestellt ist. Ziel sollte es sein, das Einbringen eines Prüfdrahtes mit einem Durchmesser von 1,0 mm bei einer Kraft von 1 N in den Heizblock, d.h. durch den Berührungsschutz hindurch, zu verhindern. Mit Blick auf eine möglichst gute Durchströmung des Berührungsschutzes sollte die zur Durchströmung durch den Berührungsschutz offene Fläche mit etwa 75 bis 90%, bevorzugt mit zwischen 85 und 90% gewählt sein.

Das Kunststoffnetz ist an einer Strebenanordnung befestigt, deren Streben die jeweiligen Gehäuseöffnungen überspannen. Dadurch wird verhindert, dass das Kunststoffnetz an der Oberfläche des Heizblocks anliegt.

Mit der vorliegenden Erfindung wird ein sicherer Berührungsschutz geschaffen, so dass es nicht mehr erforderlich ist, zwischen den Wärme erzeugenden Elementen und den Wärme abgebenden Elementen eine Isolierschicht vorzusehen. Der Wirkungsgrad der erfindungsgemäßen Heizvorrichtung ist daher gegenüber der aus der EP 1 768 459 A1 vorbekannten verbessert, insbesondere wenn eine mehrlagige redundante Isolierschicht ausgebildet wird, die eine relativ schlechte Wärmeleitfähigkeit hat.

Aus der EP 1 621 378 A1 ist eine elektrische Heizvorrichtung der gattungsgemäßen Art bekannt, bei welcher gegenüberliegende Gehäuseöffnungen mit Strömungswiderstandsgittern abgedeckt sind. Diese Strömungswiderstandsgitter dienen aber der angemessenen Einstellung eines Strömungswiderstandes durch das Gehäuse an denjenigen Stellen, wo Elemente des Heizblocks fehlen. Hiervon unterscheidet sich der erfindungsgemäße Vorschlag dadurch, dass der Berührungsschutz den aktiven Elementen des Heizblocks, d.h. dem wenigstens einen Wärme abgebenden Element und/oder dem wenigstens einen Wärme erzeugenden Element in Strömungsrichtung unmittelbar vor- bzw. nachgelagert ist. Entsprechendes gilt für die EP 1 731 340 A1, die wenigstens ein in dem Gehäuse aufgenommenes Platzhalterelement offenbart, welches sich benachbart zu einem Element des Heizblocks befindet.

Bei der erfindungsgemäßen elektrischen Heizvorrichtung ist der Heizblock umfänglich von dem üblicherweise aus einem isolierenden Material, speziell Kunststoff gebildeten Gehäuse umschlossen, wohingegen die von dem Gehäuse freigelassenen und einander gegenüberliegenden Gehäuseöffnungen durch den Berührungsschutz, speziell durch das Kunststoffgitter so weit abgedeckt sind, dass das zu erwärmende Medium, üblicherweise Luft, durch den Berührungsschutz hindurch zu dem Heizblock, insbesondere zu den in Strömungsrichtung hinter dem Berührungsschutz liegenden stromführenden Bauteilen des Heizblocks gelangen kann, nicht aber Körperteile eines Monteurs oder von Wartungspersonal beziehungsweise von diesen Personen benutztes Werkzeug oder aber in einem Kanal zur Luftführung gelangte, gegebenenfalls auch mit der Luftströmung verschleppte Fremdkörper.

Gemäß einer Weiterbildung der vorliegenden Erfindung kann die Strebenanordnung durch eine oder mehrere, sich parallel zueinander erstreckende Streben oder auch eine Gitteranordnung gebildet sein. Die einzelnen Streben beziehungsweise Gitterstäbe der Strebenanordnung sind vorzugsweise so steif ausgebildet, dass bei der üblichen Belastung keine hinreichende Durchbiegung derart stattfindet, dass das Kunststoffnetz sich an die zur Gehäuseöffnung freiliegende Oberfläche des Heizblocks anlegen kann.

Im Hinblick auf eine wirtschaftliche Herstellung wird gemäß einer Weiterbildung der vorliegenden Erfindung vorgeschlagen, dass das Kunststoffnetz mit den Streben der Strebenanordnung durch Überspritzen des Kunststoffnetzes mit einer die Strebenanordnung ausbildenden Kunststoffkomponente verbunden ist. Mithin wird bei der Herstellung der elektrischen Heizvorrichtung das Kunststoffnetz in eine Spritzgießform eingelegt, die ein Formnest zur Ausbildung der Strebenanordnung umfasst. Das Formnest ist dabei vorzugsweise so ausgebildet, dass die Kunststoffkomponente zur Ausbildung der Strebenanordnung nicht nur auf einer Seite des Kunststoffnetzes ausgeformt wird, sondern auch darüber hinaus auch auf der gegenüberliegenden Seite, so dass das Kunststoffnetz nach dem Überspritzen von beidseitig des Kunststoffnetzes erstarrter Kunststoffkomponente eingesiegelt ist. Die Streben- bzw. Gitteranordnung ist dabei vorzugsweise so ausgebildet, dass sich die jedenfalls parallel zu den Lagen des Heizblocks erstreckenden Streben auf gleicher Höhe wie die Wärme erzeugenden Elemente befinden, so dass das zu erwärmende Medium ungehindert die Wärme abgebenden Elemente überstreichen kann. Gemäß einer bevorzugten Weiterbildung ist wenigstens ein Abstandselement zwischen dem Heizblock und dem Berührungsschutz vorgesehen. Hierdurch wird verhindert, dass auch bei einer gewissen Durchbiegung des Berührungsschutzes gegebenenfalls auch der Strebenanordnung aufgrund einer denkbaren, von außen wirkenden Druckbeaufschlagung eine unmittelbare Kontaktierung mit den Elementen des Heizblocks durch den Berührungsschutz hindurch auftritt. Das bzw. die Abstandselemente sind so gewählt, dass üblicherweise ein Abstand zwischen dem Berührungsschutz und dem Heizblock von zwischen 4 und 8 mm eingestellt ist. Bei denkbaren Durchbiegungen des Berührungsschutzes sollte der Abstand zwischen dem Heizblock und dem Berührungsschutz durch angemessene Dimensionierung des bzw. der Abstandselemente zumindest 2 mm sein. Die Abstandselemente können auf beiden Seiten des Heizblocks zwischen diesem und den den Berührungsschutz abgedeckten Rahmenöffnungen vorgesehen sein.

Gemäß einer bevorzugten Weiterbildung ist das Abstandselement durch eine die Strebe der Strebenanordnung innenseitig überragende Abstandsstütze und/oder durch einen Abstandssteg gebildet, der einen wenigstens ein PTC-Element aufnehmenden Positionsrahmen des Wärme abgebenden Elementes überragt und vorzugsweise einteilig an diesem ausgeformt ist.

Bei der zweiten Fallgestaltung ist das Wärme erzeugende Element in an sich bekannter Weise durch wenigstens ein PTC-Element gebildet ist, welches zwischen parallel sich erstreckenden Blechbändern vorgesehen und welches in einem Positionsrahmen aus einem isolierenden Material aufgenommen ist. Der Positionsrahmen weist üblicherweise mehrere Aufnahmeöffnungen für die Aufnahme eines oder mehrerer PTC-Elemente auf.

Üblicherweise hat der Positionsrahmen eine geringere Dicke als die Dicke der PTC-Elemente. Gemäß der Weiterbildung bildet der Positionsrahmen aber auch das Abstandselement aus, welches den im Wesentlichen ebenen Heizblock überragt und den Berührungsschutz, speziell das Kunststoffnetz auf Abstand zu der Oberfläche des Heizblocks hält. Hierzu ist der Positionsrahmen üblicherweise aus der Ebene des Heizblocks hinaus verlängert und überragt diesen.

Bei der anderen Fallgestaltung wird die wenigstens eine Strebe einer Strebenanordnung, die die Gehäusenöffnung durchsetzt, als Abstandselement ausgebildet. In an sich bekannter Weise können sich die Streben dabei parallel zu den Lagen der Wärme abgebenden Elemente und diesen vorgelagert erstrecken. Auch sich rechtwinklig zu diesen Streben erstreckende Querstreben können mit Abstandsstegen versehen sein. Die Abstandsstütze kann dabei mit dem Abstandssteg, der durch den Positionsrahmen gebildet wird, zusammenwirken, um den notwendigen Abstand zwischen dem Berührungsschutz und den Elementen des Heizblocks zu bewirken. So können die Abstandsstützen und die Abstandsstege jeweils in Längsrichtung durchgängig zu den Streben bzw. Positionsrahmen ausgebildet sein. Jeweils an dem Schnittpunkt von Abstandsstütze und Abstandssteg können zumindest einer von Abstandsstütze und Abstandssteg eine den anderen aufnehmende Aussparung aufweisen, so dass sich eine gewisse Verlinkung der beiden Elemente ergibt.

Gemäß einer bevorzugten Weiterbildung der vorliegenden Erfindung ist die Strebenanordnung zusammen mit dem Kunststoffnetz an das Gehäuse angeclipst. Diese Ausgestaltung bietet die Möglichkeit, den erfindungsgemäßen Berührungsschutz bei bereits installierten elektrischen Heizvorrichtungen nachzurüsten. Das Anclipsen erfolgt dabei üblicherweise durch Rastelemente, die beim Spritzen der Strebenanordnung mit ausgeformt werden.

Bei einer alternativen Ausgestaltung umfasst das Gehäuse ein Gehäuseoberteil und ein Gehäuseunterteil, wobei jedes der Gehäuseteile eine der Gehäuseöffnungen freilässt. Diese Gehäuseteile sind aus Kunststoff ausgebildet und umschließen umfänglich den Heizblock. Sie weisen üblicherweise die Strebenanordnung auf, so dass das Kunststoffnetz unmittelbar mit dem zugeordneten Gehäuseteil durch Umspritzen mit dem die Gehäuseteile bildenden Kunststoffmaterial verbunden ist.

Gemäß einer weiteren bevorzugten Ausgestaltung der vorliegenden Erfindung ist zwischen den stromführenden Bauteilen des Heizblocks und dem Berührungsschutz jeweils eine Kriechstrecke von mindestens 5 mm ausgebildet. Zu dieser Kriechstrecke tragen zum Einen die Abstandselemente bei, und zwar auch dann, wenn diese lediglich einen Abstand zwischen dem Heizblock und der Innenseite des Berührungsschutzes schaffen, der geringer als das obige Maß für die Kriechstrecke ist. In diesem Fall wird durch geometrische Ausgestaltung des bzw. der Abstandselemente eine entsprechende Kriechstrecke eingestellt. Insbesondere werden an dem bzw. den Abstandselementen sich parallel zu der Ebene des Heizblocks erstreckende Vorsprünge ausgeformt, durch welche die Kriechstrecke vergrößert wird.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Figur 1: eine perspektivische Seitenansicht eines ersten Ausführungsbeispiels vor der Montage des Berührungsschutzes;
- Figur 2: eine perspektivische Draufsicht auf den Berührungsschutz nach Figur 1;
- Figur 3: eine perspektivische Draufsicht eines zweiten Ausführungsbeispiels der vorliegenden Erfindung;
- Figur 4: eine perspektivische Innenansicht eines Gehäuseteils des in Figur 3 gezeigten zweiten Ausführungsbeispiels;
- Figur 5: eine Querschnittsansicht des in den Figuren 3 und 4 gezeigten zweiten Ausführungsbeispiels; und
- Figur 6: eine perspektivische Innenansicht entsprechend Figur 4 zu einem Gehäuse eines dritten Ausführungsbeispiels.

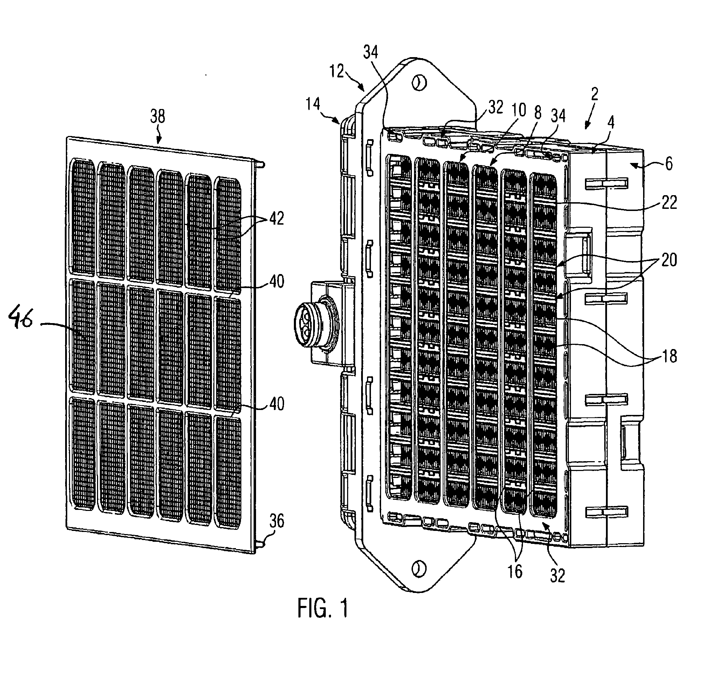

Figur 1 zeigt eine elektrische Heizvorrichtung als Zusatzheizung für ein Kraftfahrzeug mit einem Gehäuse 2 umfassend zwei identisch ausgebildete Gehäuseteile 4, 6, die unter Einschluss eines Heizblocks 8 durch Verrasten gefügt sind. Die Gehäuseteile 4, 6 haben jeweils eine den Heizblock 8 freigebende Gehäuseöffnung 10 und sind an ihrer Anschlussseite mit einem Flansch 12 verbunden, der elektrische Steckkontakte für den Anschluss des Heizblocks 8 sowie einer von einem Steuergehäuse 14 umgebenden Steuerung freigibt und hält.

Figur 1 zeigt das Ausführungsbeispiel von der Strömungseinlassseite. Dort ist die Gehäuseöffnung 10 des Gehäuseteils 4 von fünf Querstreben 16 durchsetzt. Die Querstreben 16 erstrecken sich rechtwinklig zu den Lagen des Heizblocks 8. Diese Lagen werden gebildet durch Wärme abgebende Elemente in Form von Radiatorelemente 18 und dazwischen aufgenommene Wärme erzeugende Elemente 20.

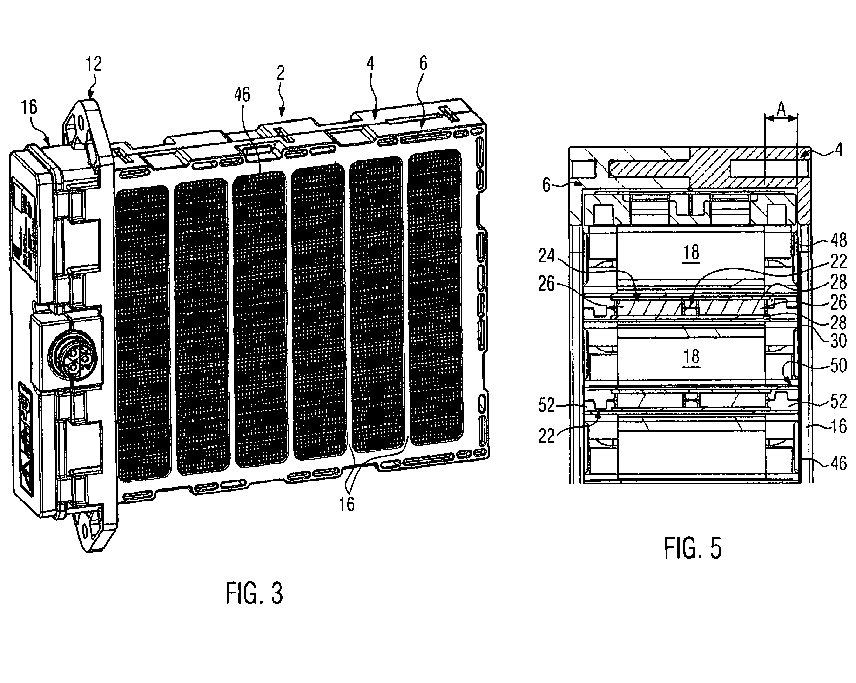

Wie sich insbesondere aus Figur 5 ergibt, bestehen die Wärme erzeugenden Elemente 20 jeweils aus einem Positionsrahmen 22 aus einem elektrisch isolierenden Material, der eine Aufnahmeöffnung 24 zur Aufnahme jeweils eines PTC-Elementes 26 ausspart. Die Positionsrahmen 22 nehmen ferner elektrisch leitende Blechbänder 28 in sich auf, die an gegenüberliegenden Seiten des PTC-Elementes 16 an diesen anliegen und diese bestromen. Bei dem in Figur 5 gezeigten Ausführungsbeispiel sind auf der Außenseite einzelner Blechbänder 28 jeweils Isolierlagen 30 vorgesehen, welche die mit unterschiedlicher Polarität bestromten Blechbänder 28 elektrisch gegenüber den metallischen Radiatorelementen 18 isolieren, so dass einzelne Wärme erzeugende Elemente 20 elektrisch voneinander begrenzt sind und definiert angesteuert werden können. Es soll verhindert werden, dass sich innerhalb des Heizblocks 8 unterschiedliche Potentiale unmittelbar gegenüber liegen. Dadurch ist es beispielsweise möglich, zwei Heizstufen des Heizblocks über einen Masseanschlus zu betreiben.

Einander gegenüberliegende Längsholme 32 des rahmenförmigen Gehäuses 2 weisen Rastöffnungen 34 zur Aufnahme von Rastvorsprüngen 36 einer einen Berührungsschutz ausbildenden Abdeckung 38 auf. Diese Abdeckung 38 besteht aus einem spritzgegossenen Abdeckrahmen 44, welcher von Rahmenlängs- und Rahmenquerstreben 40, 42 durchsetzt ist. Die Abdeckung 38 umfasst ferner ein Kunststoffnetz 46, welches beidseitig von dem die Streben 40, 42 und den Abdeckrahmen 44 ausbildenden Kunststoffmaterial mittels Umspritzen mit diesem verbunden ist. Dementsprechend sind die Streben 40, 42 und der Abdeckrahmen 44 in Strömungsrichtung beiderseits des Kunststoffnetzes 46 ausgeformt.

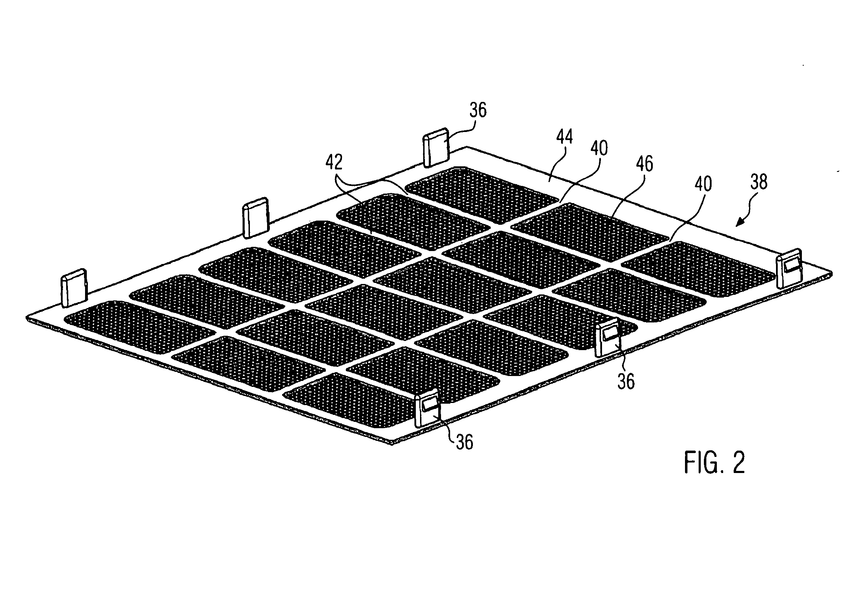

Die in den Figuren 1 und 2 gezeigte Abdeckung 38 kann lösbar mit dem Gehäuse 2 verbunden werden. Hierzu werden die Rastvorsprünge 36 in die zugeordneten Rastöffnungen 34 eingebracht. An den Rastvorsprüngen 36 ausgebildete Rastnasen verriegeln dabei gegen das Gehäuse 2, so dass die Abdeckung 38 unverlierbar an dem Gehäuse 2 gehalten ist.

Das Kunststoffnetz 46 hat bei dem in den Figuren 1 und 2 gezeigten Ausführungsbeispiel eine Maschenweite derart, dass ein Drahtstück mit einem Nenndurchmesser von 1 mm nicht durch das Kunststoffnetz 46 hindurch bis zu den Elementen 18, 20 des Heizblocks 8 gelangen kann.

Die Rahmenquerstreben 42 fluchten mit den Querstreben 16 des Gehäuseteils 4. Durch die kumulierte Dicke der Querstreben 16 und der Abdeckung 18 insbesondere im Bereich der Rahmenquerstreben 42 ergibt sich ein freier Abstand zwischen der Oberfläche des Heizblocks 8 und dem Kunststoffnetz 46 von etwa 6 mm. Durch die Rahmenlängsstreben 40 wird das Kunststoffnetz 46 zusätzlich versteift, so dass eine gegen das Kunststoffnetz 46 wirkende Druckkraft nicht dazu führt, dass sich dieses bis auf die Ebene des Heizblocks 8 runterdrücken lässt.

Ein weiteres Ausführungsbeispiel ist in den Figuren 3 bis 5 verdeutlicht. Gleiche Bauteile sind gegenüber dem zuvor diskutierten Ausführungsbeispiel mit gleichen Bezugszeichen versehen. Während das zuvor unter Bezugnahme auf die Figuren 1 und 2 gezeigte Ausführungsbeispiel sich insbesondere zum Nachrüsten von bestehenden elektrischen Heizvorrichtungen eignet, wird das in den Figuren 3 bis 5 verdeutlichte Ausführungsbeispiel von vorne herein als erfindungsgemäße elektrische Heizvorrichtung erstellt. Folglich ist das Kunststoffnetz 46 als Teil des Gehäuseteils 4 bzw. 6 ausgeformt.

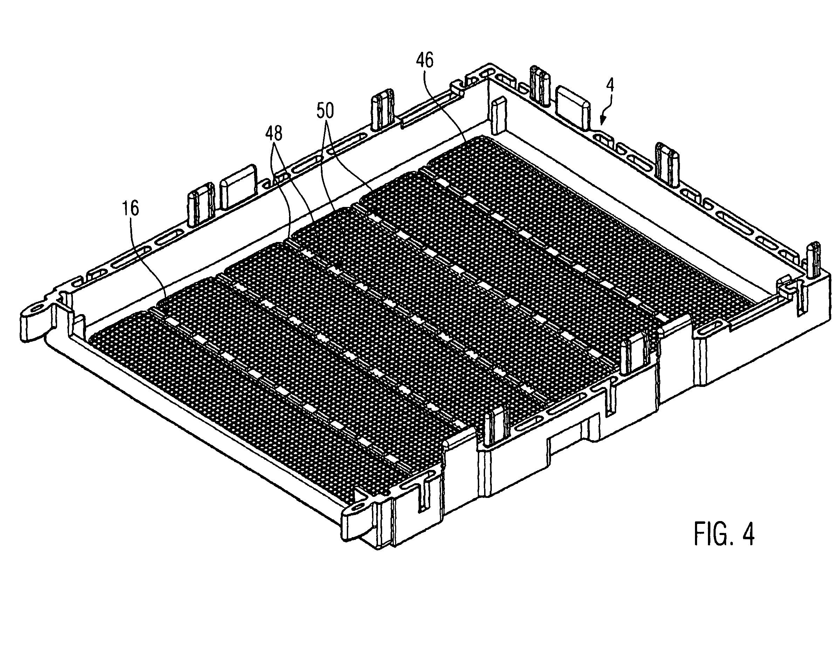

Wie insbesondere Figur 4 verdeutlicht, ist auch bei dem zweiten Ausführungsbeispiel das Kunststoffnetz 46 durch Umspritzen mit dem das Gehäuseteil 4 ausformenden Material verbunden. Das die Querstreben 16 des Gehäuseteils 4 ausformende Material befindet sich auch hier auf beiden Seiten des Kunststoffnetzes 46 und überragt dieses. Zusätzlich sind auf der Innenseite die Querstreben 16 überragende Nocken 48 ausgeformt, die zwischen sich einen Freiraum 50 aussparen, dessen Höhe (Erstreckung in einer Richtung quer zu den Lagen des geschichteten Heizblocks) in etwa der Dicke der Wärme erzeugenden Elemente 20 entspricht, so dass diese zwischen den Nocken 48 aufgenommen werden können (vgl. Figur 5) Durch diese Ausgestaltung sind die Wärme erzeugenden Elemente 20 in ihrer Ebene festgelegt. Die Nocken 48 stellen auch bei einer gewissen Durchbiegung der Querstreben 16 einen hinreichenden Abstand zwischen dem Kunststoffnetzes 46 und dem bzw. den Radiatorelemente 18 sicher.

Wenngleich das zweite Ausführungsbeispiel nach den Figuren 3 bis 5 lediglich Querstreben 16 hat, sei darauf hingewiesen, dass die jeweiligen Gehäuseteile 4, 6 nicht nur eine Strebenanordnung mit Querstreben 16, sondern auch eine solche, wie sie vorstehend für die Abdeckung 38 beschrieben worden ist und welche Querstreben und Längsstreben hat, aufweisen kann. Eine solche Strebenanordnung führt zu einer besonderen Versteifung der Gehäuseöffnung 10 und verhindert weitestgehend eine Durchbiegung des Berührungsschutzes in Richtung auf den Heizblock 8.

Wie sich insbesondere aus Figur 5 ergibt, sind bei dem Ausführungsbeispiel nach den Figuren 3 bis 5 die Positionsrahmen 22 über den Heizblock 8 hinaus, d.h. in Strömungsrichtung verlängert. Die Positionsrahmen 22 bilden dementsprechend Abstandsstege 52 aus, die beiderseits den Heizblock 8 überragen. Diese Abstandsstegen 52 wirken mit den beiden Gehäuseteilen 4, 6 zusammen und halten die Querstreben 16 auf Abstand zu dem Heizblock 8. Aufgrund der Vielzahl von Stützstellen entlang der Querstreben ist nicht zu befürchten, dass diese sich substantiell in Richtung auf den Heizblock 8 durchbiegen, beispielsweise im Falle einer von außen auf das Gehäuseteil 4 wirkenden Druckkraft. Dabei ist - wie sich aus Figur 5 ergibt - zu vermerken, dass lediglich das Gehäuseteil 4 mit einem Kunststoffnetz 46 versehen ist, wohingegen das Gehäuseteil 6 bei ansonsten identischer Ausgestaltung kein entsprechendes Kunststoffnetz 46 aufweist. Die beiden Gehäuseteile 4, 6 können daher in Spritzgießwerkzeugen identischer Geometrie ausgeformt werden mit dem Unterschied, dass in das eine Spritzgießwerkzeug zur Herstellung des Gehäuseteils 4 vor dem Einspritzen der Kunststoffkomponente das Kunststoffnetz 46 als Einlegeteil eingelegt wird. Die Abmessung der Abstandstege 52 rechtwinklig zu der den Heizblock 8 aufnehmenden Ebene ist so gewählt, dass sich ein Abstand A von zwischen 4 und 8 mm zwischen der Oberfläche des Heizblocks 8 und dem Berührungsschutz 46 ergibt.

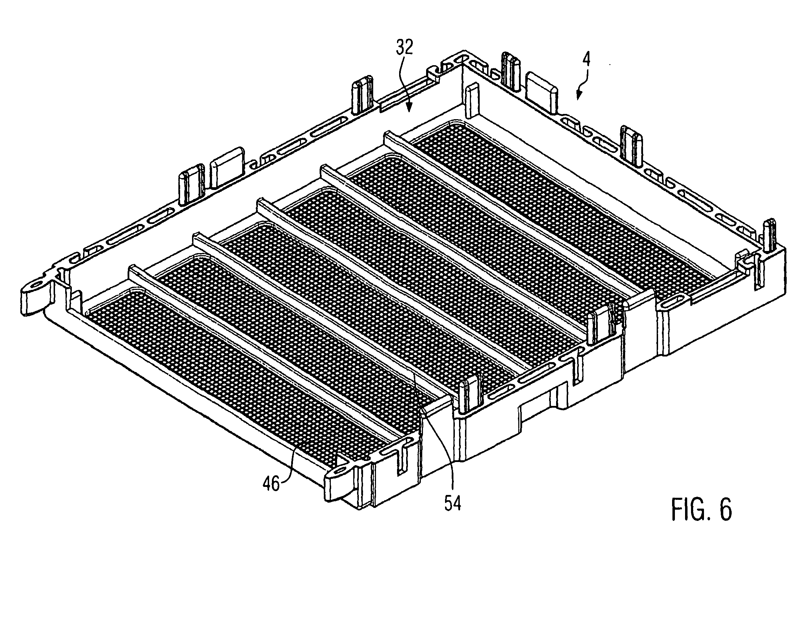

Figur 6 zeigt ein Gehäuseteil 4 eines weiteren Ausführungsbeispiels, welches im Wesentlichen identisch zu dem zuvor beschriebenen Ausführungsbeispiel ausgebildet ist mit dem Unterschied, dass sich parallel zu den Querstreben 16 auf der Innenseite des Gehäuseteils 4 Abstandsstützen 54 befinden, die sich zwischen den beiden Längsholmen 32 durchgehend mit gleichmäßiger Höhe erstrecken. Die Höhe der Abstandsstützen 54 ist so gewählt, dass der Berührungsschutz 46 mit vorbestimmten Abstand von dem Heizblock 8 gehalten ist. Der Berührungsschutz 46 stützt sich über die Abstandsstütze 54 insbesondere mit den Stirnseiten der Positionsrahmen 22 ab.

Es sei darauf hingewiesen, dass die Abstandstützen 54 auch in Kombination mit den Abstandsstegen 52 der Positionsrahmen 22 vorgesehen sein können, um durch sich rechtwinklig im Wesentlichen kreuzende Abstandsstege 52 und Abstandsstützen 54 einen gewünschten Abstand zwischen dem Kunststoffnetz 46 und dem Heizblock 8 einzustellen. Dabei können die Stirnseiten der Abstandsstege 52 und/oder der Abstandsstützen 54 nockenartig mit dazwischen liegenden Freiräumen ausgebildet sein, wie dies unter Bezugnahme auf das zweite Ausführungsbeispiel vorstehend beschrieben worden ist.

### Bezugszeichenliste

- 2: Gehäuse
- 4: Gehäuseteil
- 6: Gehäuseteil
- 8: Heizblock
- 10: Gehäuseöffnung
- 12: Flansch
- 14: Steuergehäuse
- 16: Querstrebe
- 18: Radiatorelement
- 20: Wärme erzeugendes Element
- 22: Positionsrahmen
- 24: Aufnahmeöffnung
- 26: PTC-Element
- 28: Blechband
- 30: Isolierlage
- 32: Längsholm
- 34: Rastöffnung
- 36: Rastvorsprung
- 38: Abdeckung
- 40: Rahmenlängsstrebe
- 42: Rahmenquerstrebe
- 44: Abdeckrahmen
- 46: Kunststoffnetz
- 48: Nocken
- 50: Freiraum
- 52: Abstandssteg
- 54: Abstandsstütze
- A: Abstand

## Patentansprüche

1. Elektrische Heizvorrichtung insbesondere Zusatzheizung für ein Kraftfahrzeug, mit einem Gehäuse (2) und einem Heizblock (8), welcher in dem gegenüberliegende Gehäuseöffnungen (10) ausbildenden Gehäuse (2) gehalten ist und parallele Lagen umfassend wenigstens ein Wärme abgebendes und ein Wärme erzeugendes Element (20) hat, die in dem Gehäuse (2) umfänglich umschlossen sind, und mit einem zumindest eine der Gehäuseöffnungen (10) abdeckenden Berührungsschutz aus einem isolierenden Material, welcher ein engmaschiges isolierendes Kunststoffnetz (46) umfasst, **dadurch gekennzeichnet, dass** das Kunststoffnetz (46) an einer Strebenanordnung (40; 42; 16) befestigt ist, deren Streben (40, 42; 16) die jeweiligen Gehäuseöffnungen (10) überspannen und welches durch Überspritzen des Kunststoffnetzes (46) mit einer die Strebenanordnung (40; 42; 16) ausbildenden Kunststoffkomponente mit den Streben (40, 42; 16) verbunden ist.

2. Elektrische Heizvorrichtung nach Anspruch 1, **gekennzeichnet durch** wenigstens ein zwischen dem Heizblock (8) und dem Berührungsschutz (46) vorgesehenes Abstandselement (52; 54).

3. Elektrische Heizvorrichtung nach Anspruch 2, **dadurch gekennzeichnet, dass** das Abstandselement durch eine die Strebe (40, 42; 16) der Strebenanordnung (40; 42; 16) innenseitig überragende Abstandsstütze (54) und/oder durch einen Abstandssteg (52) gebildet ist, der einen wenigstens ein PTC-Element (26) aufnehmenden Positionsrahmen (22) des Wärme erzeugenden Elementes (20) überragt.

4. Elektrische Heizvorrichtung nach einem der vorherigen Ansprüche, **dadurch gekennzeichnet, dass** die Strebenanordnung (40; 42; 16) zusammen mit dem Kunststoffnetz (46) an das Gehäuse (2) angeclipst ist.

5. Elektrische Heizvorrichtung nach einem der Ansprüche 1 bis 3, **dadurch gekennzeichnet, dass** das Gehäuse (2) ein Gehäuseoberteil (4) und ein Gehäuseunterteil (6) aufweist, die jeweils eine der Gehäuseöffnungen (10) freilassen, und dass das Kunststoffnetz (46) mittels Umspritzen mit dem zugeordneten Gehäuseteil (4; 6) verbunden ist.

6. Elektrische Heizvorrichtung nach einem der vorherigen Ansprüche, **dadurch gekennzeichnet, dass** zwischen stromführenden Bauteilen des Heizblocks (8) und dem Berührungsschutz (46) eine Kriechstrecke von mindestens 5 mm ausgebildet ist.

## Claims

1. Electrical heating device, in particular auxiliary heating for a motor vehicle, with a housing (2) and a heating block (8), which is held within the housing (2) forming oppositely situated housing openings (10) and comprises parallel layers of at least one heat emitting and one heat generating element (20), which are circumferentially enclosed in the housing (2), and with a contact protection (46) of an insulating material which covers at least one of the housing openings (10) and comprises a finely meshed plastic mesh (46), **characterised in that** the plastic mesh (46) is fastened to a strut arrangement (40; 42; 16), the struts (40; 42; 16) of which span the respective housing openings (10) and which is joined to the struts (40; 42; 16) of the strut arrangement (40; 42; 16) by overmoulding of the plastic mesh (46) with a plastic component forming the strut arrangement (40; 42; 16).

2. Electrical heating device according to Claim 1, **characterised by** at least one spacing element (52; 54) provided between the heating block (8) and the contact protection (46).

3. Electrical heating device according to Claim 2, **characterised in that** the spacing element is formed by a spacing support (54) protruding over the struts (40; 42; 16) of the strut arrangement (40; 42; 16) on the inside and / or by a supporting web (52), which protrudes over a positional frame (22) of the heat generating element (20) which accommodates at least one PTC element (26).

4. Electrical heating device according to any of the preceding claims, **characterised in that** the strut arrangement (40; 42; 16) together with the plastic mesh (46) is clipped onto the housing (2).

5. Electrical heating device according to any one of claims 1 to 3, **characterised in that** the housing (2) has a housing upper part (4) and a housing lower part (6), each of which has one of the housing openings (10) free and that the plastic mesh (46) is joined to the assigned housing part (4; 6) by means of overmoulding.

6. Electrical heating device according to any of the preceding claims, **characterised in that a** creep path of at least 5 mm is formed between the current-carrying components of the heating block (8) and the contact protection (46).

## Revendications

1. Dispositif de chauffage électrique, en particulier chauffage d'appoint pour un véhicule automobile, avec un boîtier (2) et un bloc de chauffage (8) qui est maintenu dans le boîtier (2) constituant des ouvertures de boîtier opposées (10) et comporte des couches parallèles comprenant au moins un élément de libération de chaleur et un élément de production de chaleur (20) qui sont largement enfermés dans le boîtier (2), et avec une protection contre les contacts accidentels en matériau isolant comportant un filet en matière synthétique isolant à fines mailles (46), qui recouvre au moins une des ouvertures de boîtier (10),
**caractérisé en ce que** le filet en matière synthétique (46) est fixé à un agencement de traverses (40, 42, 16), dont les traverses (40, 42, 16) enjambent les ouvertures de boîtier correspondantes (10) et qui est relié aux traverses (40, 42, 16) par surmoulage du filet en matière synthétique (46) avec un composant en matière synthétique qui constitue l'agencement de traverses (40, 42, 16).

2. Dispositif de chauffage électrique selon la revendication 1, **caractérisé par** au moins un élément d'espacement (52, 54) pourvu entre le bloc de chauffage (8) et la protection contre les contacts accidentels (46).

3. Dispositif de chauffage électrique selon la revendication 2, **caractérisé en ce que** l'élément d'espacement est constitué par un support d'espacement (54) qui dépasse à l'intérieur de l'une des traverses (40, 42, 16) de l'agencement de traverses (40, 42, 16) et/ou par une traverse d'espacement (52) qui dépasse d'un châssis de positionnement (22) comportant au moins un élément PTC (26) de l'élément de production de chaleur (20).

4. Dispositif de chauffage électrique selon l'une des revendications précédentes, **caractérisé en ce que** l'agencement de traverses (40, 42, 16) est clipsé conjointement au filet en matière synthétique (46) sur le boîtier (2).

5. Dispositif de chauffage électrique selon l'une des revendications 1 à 3, **caractérisé en ce que** le boîtier (2) comporte une partie de boîtier supérieure (4) et une partie de boîtier inférieure (6) qui libèrent respectivement une des ouvertures de boîtier (10), et **en ce que** le filet en matière synthétique (46) est relié par surmoulage à l'élément de boîtier associé (4, 6).

6. Dispositif de chauffage électrique selon l'une des revendications précédentes, **caractérisé en ce qu'**une ligne de fuite d'au moins 5 mm est constituée entre les composants conducteurs du bloc de chauffage (8) et la protection contre les contacts accidentels (46).
